# EUROPÄISCHE PATENTSCHRIFT

(11) **EP 2 864 176 B1**
(45) Veröffentlichungstag und Bekanntmachung des Hinweises auf die Patenterteilung: **27.09.2017**
(21) Anmeldenummer: 13750531.9
(22) Anmeldetag: 06.08.2013
(51) Int. Cl.: B61L 25/02, B61L 23/00, B61L 5/18

(54) **HALTEPUNKTANZEIGEEINRICHTUNG**
STOPPING POINT DISPLAY DEVICE
DISPOSITIF D'INDICATION DE POINT D'ARRÊT

(30) Priorität: 20.08.2012 DE 102012214777
(43) Veröffentlichungstag der Anmeldung: 29.04.2015
(73) Patentinhaber: Siemens Aktiengesellschaft, 80333 München (DE)
(72) Erfinder: ARPACI, Gamze, 38108 Braunschweig (DE); BODE, Christian, 38118 Braunschweig (DE); JUNG, Bernd, 38162 Cremlingen (DE); SCHOSSIG, Frauke, 38118 Braunschweig (DE)
(86) Internationale Anmeldenummer: PCT/EP2013/066437
(87) Internationale Veröffentlichungsnummer: WO 2014/029608

(56) Entgegenhaltungen:
- WO-A1-2006/013406
- WO-A1-2008/139470
- US-A- 5 963 345
- MEIER J ET AL: "KOMBINATIONSSIGNALISIERUNG BEI DEN DEUTSCHEN BAHNEN - BETRIEBLICHE,KONSTRUKTIVE UND SCHALTUNGSTECHNISCHE ASPEKTE", SIGNAL + DRAHT, TELZLAFF VERLAG GMBH. DARMSTADT, DE, Bd. 85, Nr. 7/08, 1. Juli 1993 (1993-07-01), Seite 224, XP000414346, ISSN: 0037-4997

## Beschreibung

Die Erfindung bezieht sich auf eine Haltepunktanzeigeeinrichtung zum Anzeigen eines Sollhaltebereichs für ein Schienenfahrzeug auf einer Schienenstrecke, insbesondere zum Anzeigen eines Sollhaltebereichs an einem Bahnsteig.

Um einen schnellen und sicheren Fahrgastwechsel an Bahnsteigen zu gewährleisten, ist es wichtig, dass die am Bahnsteig haltenden Schienenfahrzeuge mit sehr hoher Genauigkeit an einem vorgesehenen Haltepunkt zum Stehen kommen. Dies gilt insbesondere für Bahnsteige, die mit Bahnsteigtüren ausgestattet sind, da bei diesen die Türen des Schienenfahrzeugs sehr genau relativ zu den Bahnsteigtüren positioniert werden müssen, um einen reibungslosen Ein- und Ausstieg der Fahrgäste zu ermöglichen.

Selbst wenn die Bahnsteige nicht mit Bahnsteigtüren ausgestattet sind, ist eine hohe Positioniergenauigkeit beim Anhalten der Schienenfahrzeuge von Vorteil, da es heutzutage häufig Markierungen z. B. für Schlechtsehende oder Blinde gibt, die die zu erwartende Position der Fahrzeugtüren markieren, um ein Ein- und Aussteigen zu vereinfachen.

Bekanntermaßen können Bahnsteige mit Haltetafeln oder speziellen Markierungen am Bahnsteigrand oder Tunnelwand ausgestattet werden, die dem Fahrzeugführer des Schienenfahrzeugs den Sollhaltebereich angeben. In der Regel befinden sich derartige Haltetafeln oder Markierungen jedoch nicht mehr im Sichtfeld des Fahrzeugführers, wenn dieser in den Bereich des Sollhaltebereichs kommt. Des Weiteren können diese Haltepunktanzeigen nicht dynamisch an die aktuelle Situation (z.B. Fahrplanlage, Ersatzverkehr, etc.) angepasst werden.

Aus dem Artikel "Kombinationssignalisierung bei den Deutschen Bahnen - Betriebliche, konstruktive und schaltungstechnische Aspekte", Signal + Draht, 85 (1993) 7/8 ist beispielsweise ein Zusatzanzeiger für ein Kombinationssignal bekannt, bei dem die Lichtverteilung an den Fahrweg des Triebfahrzeugführers angepasst ist.

Außerdem ist aus der Druckschrift US 1 658 316 A einen Haltepunktanzeigeeinrichtung zum Anzeigen eines Sollhaltebereichs für ein Schienenfahrzeug auf einer Schienenstrecke mit einem Lichtprojektor bekannt, bei der der Lichtprojektor in Richtung des auf den Sollhaltebereich fahrenden Schienenfahrzeugs ausgerichtet ist und oberhalb der Schienenstrecke eine Lichtprojektion erzeugen kann, die die Position des Sollhaltebereichs anzeigt.

Der Erfindung liegt daher die Aufgabe zugrunde, eine Haltepunktanzeigeeinrichtung anzugeben, die einem Fahrzeugführer das genaue Anhalten des Schienenfahrzeugs in einem Sollhaltebereich besonders einfach ermöglicht.

Diese Aufgabe wird erfindungsgemäß durch eine Haltepunktanzeigeeinrichtung mit den Merkmalen gemäß Patentanspruch 1 gelöst. Vorteilhafte Ausgestaltungen der erfindungsgemäßen Haltepunktanzeigeeinrichtung sind in Unteransprüchen angegeben.

Danach ist erfindungsgemäß vorgesehen, dass der Lichtprojektor als Lichtprojektion ein dreidimensionales Gebilde erzeugt, innerhalb dessen sich der Fahrzeugführer beim Zufahren auf den Sollhaltebereich räumlich orientieren kann.

Ein wesentlicher Vorteil der erfindungsgemäßen Haltepunktanzeigeeinrichtung ist darin zu sehen, dass sie eine räumliche Orientierung des Fahrzeugführers innerhalb der Lichtprojektion ermöglicht bzw. vereinfacht. Durch die Anzeige des Sollhaltebereichs durch eine solche Lichtprojektion im Bereich der Schienenstrecke ist es möglich, dass der Sollhaltebereich im Blickfeld des Fahrzeugführers erzeugt wird und dieser seine übliche Körperhaltung und Blickrichtung in Fahrtrichtung nach vorn beibehalten kann, wenn er das Schienenfahrzeug mit nach vorn beibehalten kann, wenn er das Schienenfahrzeug mit höchster Genauigkeit im Sollhaltebereich positionieren will.

Der Sollhaltebereich kann punktförmig sein und durch einen Sollhaltepunkt gebildet sein; alternativ kann sich der Sollhaltebereich entlang der Fahrtrichtung mit einer vorgegebenen Haltelänge erstrecken.

Eine besonders hohe Positioniergenauigkeit des Schienenfahrzeugs lässt sich erreichen, wenn die Lichtprojektion in der Höhe des Führerstandes des Schienenfahrzeugs erzeugt wird und der Führerstand bei Erreichen des Sollhaltebereichs von der Lichtprojektion erfasst wird. Durch eine Lichtprojektion in Höhe des Führerstandes wird erreicht, dass der Fahrzeugführer den Sollhaltebereich besonders einfach und damit genau erkennen kann, was eine zielgenaue Positionierung des Schienenfahrzeugs im Sollhaltebereich vereinfacht.

Mit Blick auf die Erzeugung der Lichtprojektion wird es als vorteilhaft angesehen, wenn der Lichtprojektor zumindest einen Laser umfasst, der Laserstahlen in Richtung des auf den Sollhaltebereich fahrenden Schienenfahrzeugs erzeugen kann, und die Lichtprojektion durch die Laserstrahlen gebildet wird. Mit Laserstrahlen lassen sich Lichtprojektionen besonders einfach und mit hoher Genauigkeit bilden, so dass eine sehr exakte Anzeige des Sollhaltebereichs erreichbar ist.

Bei dem Lichtprojektor handelt es sich vorzugsweise um einen 3D-Hologrammprojektor. Mit einem solchen 3D-Hologrammprojektor lässt sich in besonders einfacher Weise im Bereich des Sollhaltebereichs ein dreidimensionales Hologramm projizieren, das den Sollhaltebereich angibt.

Vorzugsweise umfasst die Haltepunktanzeigeeinrichtung eine mit dem Lichtprojektor verbundene Steuereinrichtung, die den Lichtprojektor derart ansteuert, dass dessen Lichtprojektion den Sollhaltebereich anzeigt.

Um zu ermöglichen, dass die Haltepunktanzeigeeinrichtung unterschiedliche Sollhaltebereiche anzeigen kann, beispielsweise weil sich die im Sollhaltebereich anzuhaltenden Schienenfahrzeuge unterscheiden, wird es als vorteilhaft angesehen, wenn die Steuereinrichtung derart ausgestaltet ist, dass sie für jedes einfahrende Schienenfahrzeug den Sollhaltebereich individuell ermittelt und für jedes einfahrende Schienenfahrzeug ein individuelles Steuersignal erzeugt, mit dem dem Lichtprojektor der Sollhaltebereich für die Lichtprojektion vorgegeben wird. Bei dieser Ausgestaltung ist es also mittels der Steuereinrichtung möglich, für jedes Schienenfahrzeug individuell einen optimalen Sollhaltebereich für die Lichtprojektion vorzusehen.

Die Erfindung bezieht sich darüber hinaus auf einen Bahnsteig mit einer derartigen Haltepunktanzeigeeinrichtung.

Bezüglich der Vorteile des erfindungsgemäßen Bahnsteigs sei auf die obigen Ausführungen im Zusammenhang mit der erfindungsgemäßen Haltepunktanzeigeeinrichtung verwiesen.

Darüber hinaus bezieht sich die Erfindung auf ein Verfahren zum Anzeigen eines Sollhaltebereichs für ein Schienenfahrzeug auf einer Schienenstrecke, insbesondere zum Anzeigen eines Sollhaltebereichs an einem Bahnsteig, bei dem ein Lichtprojektor einer Haltepunktanzeigeeinrichtung in Richtung des auf den Sollhaltebereich fahrenden Schienenfahrzeugs ausgerichtet wird und mit dem Lichtprojektor eine Lichtprojektion oberhalb der Schienenstrecke erzeugt wird, die die Position des Sollhaltebereichs angibt.

Bezüglich eines solchen Verfahrens ist erfindungsgemäß vorgesehen, dass anhand des Lichtprojektors als Lichtprojektion ein dreidimensionales Gebilde erzeugt wird, innerhalb dessen sich der Fahrzeugführer beim Zufahren auf den Sollhaltebereich räumlich orientieren kann.

Bezüglich der Vorteile des erfindungsgemäßen Verfahrens sei auf die obigen Ausführungen im Zusammenhang mit der erfindungsgemäßen Haltepunktanzeigeeinrichtung verwiesen, da die Vorteile der erfindungsgemäßen Haltepunktanzeigeeinrichtung denen des erfindungsgemäßen Verfahrens im Wesentlichen entsprechen.

Die Erfindung wird nachfolgend anhand von Ausführungsbeispielen näher erläutert; dabei zeigen beispielhaft
- Figur 1: ein erstes Ausführungsbeispiel für eine Haltepunktanzeigeeinrichtung, die zum Anzeigen eines Sollhaltebereichs im Bereich eines Bahnsteigs angebracht ist, wobei in der Figur 1 das Einfahren eines Schienenfahrzeugs in den Bereich des Bahnsteigs vor Erreichen der Haltepunktanzeigeeinrichtung dargestellt ist,
- Figur 2: das Schienenfahrzeug gemäß Figur 1, nachdem es in den Bereich der Haltepunktanzeigeeinrichtung eingefahren ist, und
- Figur 3: ein zweites Ausführungsbeispiel für eine Haltepunktanzeigeeinrichtung.

In den Figuren werden der Übersicht halber für identische oder vergleichbare Komponenten stets dieselben Bezugszeichen verwendet.

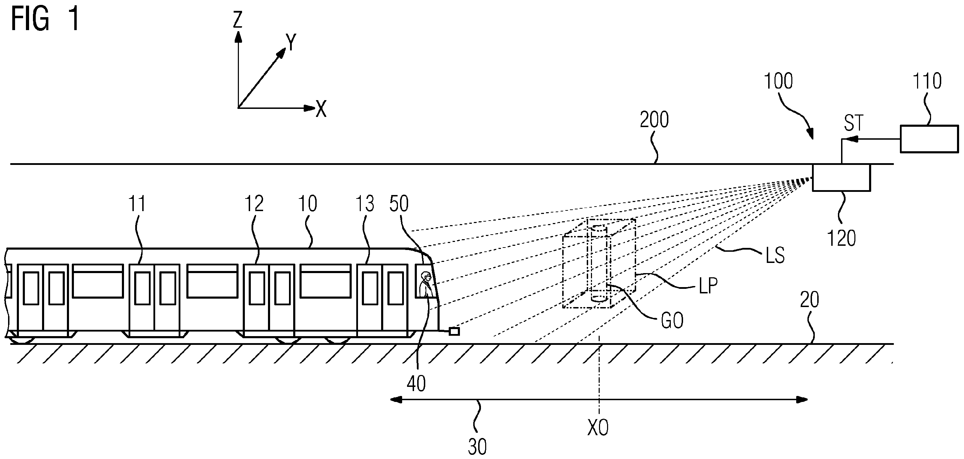

Die Figur 1 zeigt ein Schienenfahrzeug 10, das auf einer Schienenstrecke 20 in den Bereich eines mittels eines Doppelpfeils angedeuteten Bahnsteigs 30 einfährt. Das Schienenfahrzeug 10 wird von einem Fahrzeugführer gesteuert, der in der Figur 1 nur schematisch dargestellt und mit dem Bezugszeichen 40 gekennzeichnet ist. Der Fahrzeugführer befindet sich in einem Führerstand 50 des Schienenfahrzeugs 10 und hat freien Blick auf die vor ihm liegende Schienenstrecke 20 und den vor ihm liegenden Bahnsteig 30.

Der Fahrzeugführer 40 hat die Aufgabe, das Schienenfahrzeug 10 in einem Sollhaltebereich, zum Stillstand zu bringen, beispielsweise deshalb, weil bei dem Sollhaltebereich eine optimale Positionierung der Türen 11, 12 und 13 des Schienenfahrzeugs 10 relativ zum Bahnsteig 30 erreicht wird. Nachfolgend wird aus Gründen der Übersicht und aus Darstellungsgründen vereinfacht von einem punktförmigen Sollhaltebereich, also mit anderem Worten einem Sollhaltepunkt, ausgegangen; dieser punktförmige Sollhaltebereich ist mit dem Bezugszeichen X0 gekennzeichnet. Die nachfolgenden Ausführungen gelten für einen sich entlang der Fahrtrichtung mit einer gewissen Länge erstreckenden Sollhaltebereich entsprechend.

Um dem Fahrzeugführer 40 das Anhalten des Schienenfahrzeugs 10 in dem Sollhaltebereich X0 zu ermöglichen oder zu vereinfachen, ist der Bahnsteig 30 mit einer Haltepunktanzeigeeinrichtung 100 ausgestattet. Die Haltepunktanzeigeeinrichtung 100 umfasst eine Steuereinrichtung 110, die mittels Steuersignale ST einen Lichtprojektor 120 ansteuern kann.

Der Lichtprojektor 120 ist bei dem Ausführungsbeispiel gemäß Figur 1 im Bereich einer sich oberhalb der Schienenstrecke 20 und oberhalb des Bahnsteigs 30 befindlichen Bahnhofsdecke 200 angebracht. Stattdessen sind auch andere Montagemöglichkeiten für den Lichtprojektor 120 denkbar, beispielsweise im Bereich des Gleisbettes der Schienenstrecke 20 und/oder an seitlichen neben der Schienenstrecke 20 befindlichen Masten oder dergleichen.

Der Lichtprojektor 120 ist bei entsprechender Ansteuerung durch die Steuereinrichtung 110 in der Lage, ausgangsseitig Lichtstrahlen LS zu erzeugen. Vorzugsweise weist der Lichtprojektor 120 mindestens einen Laser auf, der geeignet ist, als Lichtstrahlen LS Laserstrahlen, insbesondere kohärente Laserstrahlen, zu generieren.

Die Lichtstrahlen LS des Lichtprojektors 120 überlagern sich aufgrund des Wellencharakters des Lichtes und aufgrund der von dem Lichtprojektor 120 gezielt eingestellten Phasenlage der Lichtstrahlen LS derart, dass im Bereich des Sollhaltebereichs X0 eine Lichtprojektion LP erzeugt wird. Bei der Lichtprojektion LP handelt es sich vorzugsweise um ein dreidimensionales Gebilde bzw. Lichtgebilde, das sich entlang der Fahrtrichtung X des Schienenfahrzeugs 10 sowie entlang der dazu senkrechten Richtungen Y und Z erstreckt.

Die Lichtprojektion LP wird von dem Lichtprojektor 120 im Bereich des Sollhaltebereichs X0 in Höhe des Führerstandes 50 des Schienenfahrzeugs 10 erzeugt, so dass diese den Sollhaltebereich XO miterfasst und der Führerstand 50 und damit der darin befindliche Fahrzeugführer 40 sowie die Zugspitze beim Einfahren in den Bereich der Lichtprojektion LP von dieser erfasst wird. Sobald der Fahrzeugführer 40 in den Bereich der Lichtprojektion LP gelangt, kann er sich aufgrund der dreidimensionalen Ausgestaltung der Lichtprojektion LP innerhalb des durch sie gebildeten dreidimensionalen Gebildes räumlich orientieren. Dies versetzt den Fahrzeugführer 40 in die Lage, das Schienenfahrzeug 10 optimal im Sollhaltebereich X0 zum Halten zu bringen.

Um dem Fahrzeugführer 40 die Orientierung innerhalb der Lichtprojektion LP bzw. des durch sie gebildeten dreidimensionalen Gebildes zu vereinfachen, kennzeichnet die Lichtprojektion LP den Sollhaltebereich X0 innerhalb der dreidimensionalen Lichtprojektion vorzugsweise deutlich, beispielsweise durch Linien oder dreidimensionale Objekte innerhalb des dreidimensionalen Gebildes.

Bei dem Ausführungsbeispiel gemäß Figur 1 bildet der Lichtprojektor 120 die Lichtprojektion LP derart, dass innerhalb der Lichtprojektion LP bzw. innerhalb des durch die Lichtprojektion LP gebildeten dreidimensionalen Gebildes ein geometrisches Objekt GO erzeugt wird, das den Sollhaltebereich X0 innerhalb der dreidimensionalen Lichtprojektion LP eindeutig definiert. Bei dem geometrischen Objekt GO kann es sich beispielsweise um eine Säule handeln, wie dies die Figur 1 zeigt, jedoch ist dies nur beispielhaft zu verstehen. Selbstverständlich können auch andere geometrische Objekte GO gebildet werden, die dem Fahrzeugführer 40 das Erreichen des Sollhaltebereichs X0 ermöglichen oder vereinfachen.

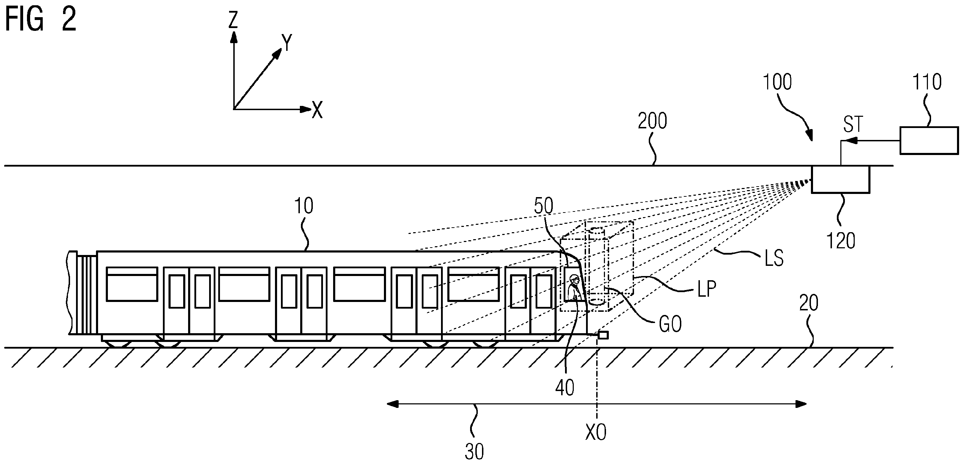

Die Figur 2 zeigt den Bahnsteig 30 gemäß Figur 1, nachdem der Führerstand 50 und damit der Fahrzeugführer 40 in den Bereich der dreidimensionalen Lichtprojektion LP gelangt ist. Es lässt sich erkennen, dass der Fahrzeugführer 40 aufgrund der dreidimensionalen Ausgestaltung der Lichtprojektion LP in die Lage versetzt wird, sich innerhalb der Lichtprojektion LP räumlich zu orientieren und ein Gefühl für den Abstand zu dem vor ihm liegenden Sollhaltebereich X0 zu erlangen. Dies versetzt den Fahrzeugführer 40 in die Lage, das Schienenfahrzeug 10 sehr genau in dem Sollhaltebereich X0 zum Stillstand zu bringen. Dadurch, dass die Lichtprojektion in Höhe des Führerstandes 50 oberhalb der Schienenstrecke 20 erzeugt wird, kann der Fahrzeugführer 40 die Positionierung des Schienenfahrzeugs 10 bzw. dessen Abbremsvorgang steuern, ohne seine übliche Blickrichtung nach vorn in Richtung Gleisbett bzw. Schienenstrecke dazu ändern zu müssen.

Wie sich den obigen Ausführungen entnehmen lässt, ist der Lichtprojektor 100 vorzugsweise derart ausgestaltet, dass seine Lichtstrahlen LS eine dreidimensionale Lichtprojektion LP, beispielsweise in Form eines dreidimensionalen Gebildes erzeugen. Eine solche dreidimensionale Lichtprojektion LP lässt sich besonders einfach und damit vorteilhaft erzeugen, wenn als Lichtprojektor 120 ein Hologrammprojektor verwendet wird, der im Bereich des Sollhaltebereichs X0 und in Höhe des Führerstandes des Schienenfahrzeugs 10 oberhalb der Schienenstrecke 20 ein dreidimensionales Hologramm erzeugt bzw. projiziert, das den Sollhaltebereich X0 innerhalb des Hologramms anzeigt. Mit anderen Worten kann es sich bei der Lichtprojektion LP gemäß den Figuren 1 und 2 um eine dreidimensionale Hologrammprojektion handeln, die von einem als 3D-Hologrammprojektor ausgestatteten Lichtprojektor 120 erzeugt wird.

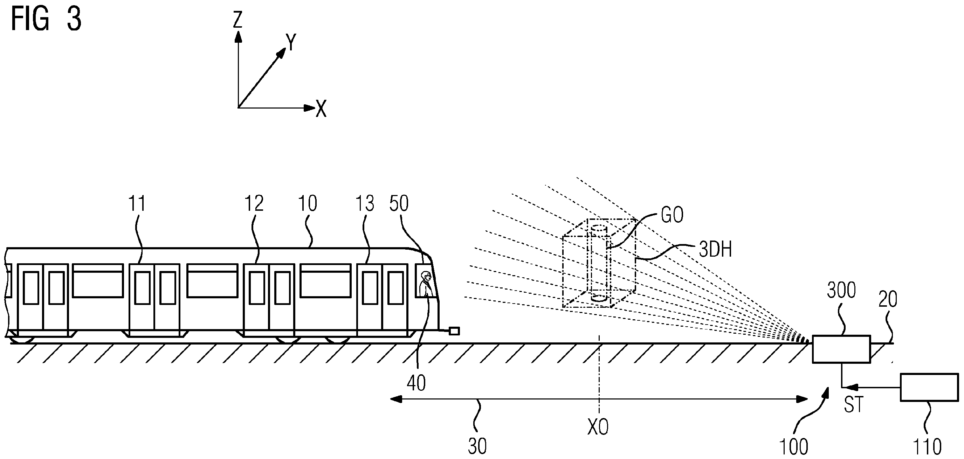

Die Figur 3 zeigt ein zweites Ausführungsbeispiel für eine Haltepunktanzeigeeinrichtung 100. Diese umfasst als Lichtprojektor einen von einer Steuereinrichtung 110 angesteuerten 3D-Hologrammprojektor 300, der im Gleisbett der Schienenstrecke 20 angebracht ist und im Bereich oberhalb der Schienenstrecke 20 in Höhe des Führerstandes 50 des oder der einfahrenden Schienenfahrzeuge als Lichtprojektion ein dreidimensionales Hologramm 3DH erzeugt. Das dreidimensionale Hologramm 3DH zeigt den Sollhaltebereich XO beispielsweise durch eine dreidimensionale Säule oder ein anderes geeignetes Objekt GO an. Im Übrigen gelten die obigen Ausführungen im Zusammenhang mit den Figuren 1 und 2 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Schienenfahrzeug
- 11: Tür
- 12: Tür
- 13: Tür
- 20: Schienenstrecke
- 30: Bahnsteig
- 40: Fahrzeugführer
- 50: Führerstand
- 100: Haltepunktanzeigeeinrichtung
- 110: Steuereinrichtung
- 120: Lichtprojektor
- 200: Bahnhofsdecke
- 300: 3D-Hologrammprojektor
- 3DH: dreidimensionales Hologramm

- GO: geometrisches Objekt
- LP: Lichtprojektion
- LS: Lichtstrahl
- ST: Steuersignal
- X: Fahrtrichtung
- X0: Sollhaltebereich
- Y: senkrechte Richtung
- Z: senkrechte Richtung

## Patentansprüche

1. Haltepunktanzeigeeinrichtung (100) zum Anzeigen eines Sollhaltebereichs (X0) für ein Schienenfahrzeug (10) auf einer Schienenstrecke (20), insbesondere zum Anzeigen eines Sollhaltebereichs (X0) an einem Bahnsteig (30), mit einem Lichtprojektor (120), der in Richtung des auf den Sollhaltebereich (X0) fahrenden Schienenfahrzeugs (10) ausgerichtet ist und oberhalb der Schienenstrecke (20) eine Lichtprojektion (LP) erzeugen kann, die die Position des Sollhaltebereichs (X0) anzeigt,
**dadurch gekennzeichnet, dass**
der Lichtprojektor (120) als Lichtprojektion (LP) ein dreidimensionales Gebilde erzeugt, innerhalb dessen sich der Fahrzeugführer (40) beim Zufahren auf den Sollhaltebereich (X0) räumlich orientieren kann.

2. Haltepunktanzeigeeinrichtung (100) nach Anspruch 1, **dadurch gekennzeichnet, dass**
- die Lichtprojektion (LP) in der Höhe des Führerstandes (50) des Schienenfahrzeugs (10) erzeugt wird und
- der Führerstand (50) bei Erreichen des Sollhaltebereichs (X0) von der Lichtprojektion (LP) erfasst wird.

3. Haltepunktanzeigeeinrichtung (100) nach einem der voranstehenden Ansprüche,
**dadurch gekennzeichnet, dass**
- der Lichtprojektor (120) zumindest einen Laser umfasst, der Laserstahlen in Richtung des auf den Sollhaltebereich (X0) fahrenden Schienenfahrzeugs (10) erzeugen kann, und
- die Lichtprojektion (LP) durch die Laserstrahlen gebildet wird.

4. Haltepunktanzeigeeinrichtung (100) nach einem der voranstehenden Ansprüche,
**dadurch gekennzeichnet, dass**
der Lichtprojektor (120) 3D-Hologrammprojektor (300) ist, der im Bereich des Sollhaltebereichs (X0) ein dreidimensionales Hologramm (3DH) projizieren kann, und
- das dreidimensionale Hologramm (3DH) den Sollhaltebereich (X0) anzeigt.

5. Haltepunktanzeigeeinrichtung (100) nach einem der voranstehenden Ansprüche,
**dadurch gekennzeichnet, dass**
die Haltepunktanzeigeeinrichtung (100) eine mit dem Lichtprojektor (120) verbundene Steuereinrichtung (110) umfasst, die den Lichtprojektor (120) derart ansteuert, dass dessen Lichtprojektion (LP) den Sollhaltebereich (X0) anzeigt.

6. Haltepunktanzeigeeinrichtung (100) nach Anspruch 5, **dadurch gekennzeichnet, dass**
die Steuereinrichtung (110) derart ausgestaltet ist, dass sie
für jedes einfahrende Schienenfahrzeug (10) den Sollhaltebereich (X0) individuell ermittelt und für jedes einfahrende Schienenfahrzeug (10) ein individuelles Steuersignal (ST) erzeugt, mit dem dem Lichtprojektor (120) der Sollhaltebereich (X0) für die Lichtprojektion (LP) vorgegeben wird.

7. Bahnsteig (30) mit einer Haltepunktanzeigeeinrichtung (100),
**dadurch gekennzeichnet, dass**
die Haltepunktanzeigeeinrichtung (100) nach einem der voranstehenden Ansprüche ausgebildet ist.

8. Verfahren zum Anzeigen eines Sollhaltebereichs (X0) für ein Schienenfahrzeug (10) auf einer Schienenstrecke (20), insbesondere zum Anzeigen eines Sollhaltebereichs (X0) an einem Bahnsteig (30),
bei dem ein Lichtprojektor (120) einer Haltepunktanzeigeeinrichtung (100) in Richtung des auf den Sollhaltebereich (X0) fahrenden Schienenfahrzeugs (10) ausgerichtet wird und
mit dem Lichtprojektor (120) eine Lichtprojektion (LP) oberhalb der Schienenstrecke (20) erzeugt wird, die die Position des Sollhaltebereichs (X0) angibt,
**dadurch gekennzeichnet, dass** anhand des Lichtprojektors (120) als Lichtprojektion (LP) ein dreidimensionales Gebilde erzeugt wird, innerhalb dessen sich der Fahrzeugführer (40) beim Zufahren auf den Sollhaltebereich (X0) räumlich orientieren kann.

## Claims

1. Stopping point indication device (100) for indicating a target stopping area (X0) for a rail vehicle (10) on a stretch of track (20), in particular for indicating a target stopping area (X0) on a platform (30), with a light projector (120), which is aligned in the direction of the rail vehicle (10) approaching the target stopping area (X0) and can generate a light projection (LP), which indicates the position of the target stopping area (X0), above the stretch of track (20), **characterised in that**
the light projector (120) generates a three-dimensional structure as the light projection (LP), within which the driver of the vehicle (40) can spatially orient himself when approaching the target stopping area (X0).

2. Stopping point indication device (100) according to claim 1,
**characterised in that**
- the light projection (LP) is generated at the height of the cabin (50) of the rail vehicle (10) and
- the cabin (50) is captured by the light projection (LP) when the target stopping area (X0) is reached.

3. Stopping point indication device (100) according to one of the preceding claims,
**characterised in that**
- the light projector (120) at least comprises a laser, which can generate laser beams in the direction of the rail vehicle (10) approaching the target stopping area (X0), and
- the light projection (LP) is formed by the laser beams.

4. Stopping point indication device (100) according to one of the preceding claims,
**characterised in that**
the light projector (120) is a 3D hologram projector (300), which can project a three-dimensional hologram (3DH) in the region of the target stopping area (X0), and
- the three-dimensional hologram (3DH) indicates the target stopping area (X0).

5. Stopping point indication device (100) according to one of the preceding claims,
**characterised in that**
the stopping point indication device (100) comprises a control device (110) connected to the light projector (120), which actuates the light projector (120) in such a way that its light projection (LP) indicates the target stopping area (X0).

6. Stopping point indication device (100) according to claim 5,
**characterised in that**
the control device (110) is embodied such that it determines the target stopping area (X0) individually for each approaching rail vehicle (10) and for each approaching rail vehicle (10) generates an individual control signal (ST), with which the target stopping area (X0) for the light projection (LP) is predefined for the light projector (120).

7. Platform (30) with a stopping point indication device (100),
**characterised in that** the stopping point indication device (100) is embodied according to one of the preceding claims.

8. Method for indicating a target stopping area (X0) for a rail vehicle (10) on a stretch of track (20), in particular for indicating a target stopping area (X0) on a platform (30), in which a light projector (120) of a stopping point indication device (100) is aligned in the direction of the rail vehicle (10) approaching the target stopping area (X0) and
a light projection (LP), which indicates the position of the target stopping area (X0), can be generated above the stretch of track (20) by the light projector (120),
**characterised in that**,
using the light projector (120), a three-dimensional structure can be generated as the light projection (LP), within which the driver of the vehicle (40) can spatially orient himself when approaching the target stopping area (X0).

## Revendications

1. Dispositif (100) d'indication de point d'arrêt pour indiquer une plage (X0) d'arrêt de consigne pour un véhicule (10) ferroviaire sur une voie (20) ferrée, notamment pour indiquer une plage (X0) d'arrêt de consigne sur un quai (30), comprenant un projecteur (120) de lumière, qui est dirigé dans la direction du véhicule (10) ferroviaire passant sur la plage (X0) d'arrêt de consigne et qui peut produire, au-dessus de la voie (20) ferrée, une projection (LP) de lumière indiquant la position de la plage (X0) d'arrêt de consigne,
**caractérisé en ce que**
le projecteur (120) de lumière produit, comme projection (LP) de lumière, une structure en trois dimensions, dans laquelle le conducteur (40) du véhicule peut s'orienter dans l'espace, lors de l'arrivée sur la plage (X0) d'arrêt de consigne.

2. Dispositif (100) d'indication de point d'arrêt suivant la revendication 1,
**caractérisé en ce que**
- la projection (LP) de lumière est produite au niveau du poste (50) de conduite du véhicule (10) ferroviaire et
- le poste (50) de conduite est détecté par la projection (LP) de lumière, lorsque la plage (X0) d'arrêt de consigne est atteinte.

3. Dispositif (100) d'indication de point d'arrêt suivant l'une des revendications précédentes,
**caractérisé en ce que**
- le projecteur (120) de lumière comprend au moins un laser, qui peut produire des faisceaux laser en direction du véhicule (10) ferroviaire passant sur la plage (X0) d'arrêt de consigne et
- la projection (LP) de lumière est formée par les faisceaux laser.

4. Dispositif (100) d'indication de point d'arrêt suivant l'une des revendications précédentes,
**caractérisé en ce que**
- le projecteur (120) de lumière est un projecteur (300) d'hologramme en 3D, qui peut projeter dans la région de la plage (X0) d'arrêt de consigne un hologramme (3DH) en trois dimensions et
- l'hologramme (3DH) en trois dimensions indique la plage (X0) d'arrêt de consigne.

5. Dispositif (100) d'indication de point d'arrêt suivant l'une des revendications précédentes,
**caractérisé en ce que**
le dispositif (100) d'indication de point d'arrêt comprend un dispositif (110) de commande, qui est relié au projecteur (120) de lumière et qui commande le projecteur (120) de lumière, de manière à ce que sa projection (LP) de lumière indique la plage (X0) d'arrêt de consigne.

6. Dispositif (100) d'indication de point d'arrêt suivant la revendication 5,
**caractérisé en ce que**
le dispositif (110) de commande est conformé de manière à ce qu'il détermine individuellement, pour chaque véhicule (10) ferroviaire entrant, la plage (X0) d'arrêt de consigne et à produire, pour chaque véhicule (10) ferroviaire entrant, un signal (ST) individuel de commande, par lequel il est prescrit, au projecteur (120) de lumière, la plage (X0) d'arrêt de consigne pour la projection (LP) de lumière.

7. Quai (30) ayant un dispositif (100) d'indication de point d'arrêt,
**caractérisé en ce que**
le dispositif (100) d'indication de point d'arrêt est constitué suivant l'une des revendications précédentes.

8. Procédé d'indication d'une plage (X0) d'arrêt de consigne pour un véhicule (10) ferroviaire sur une voie (20) ferrée, notamment pour indiquer une plage (X0) d'arrêt de consigne sur un quai (30),
dans lequel on dirige un projecteur (120) de lumière d'un dispositif (100) d'indication de point d'arrêt en direction du véhicule (10) ferroviaire passant sur la plage (X0) d'arrêt de consigne et on produit, par le projecteur (120) de lumière, au-dessus de la voie (20) ferrée, une projection (LP) de lumière, qui indique la position de la plage (X01) d'arrêt de consigne,
**caractérisé en ce que**
on produit, à l'aide du projecteur (120) de lumière comme projection (LP) de lumière, une structure en trois dimensions, à l'intérieur de laquelle le conducteur (40) du véhicule peut s'orienter dans l'espace, lors de l'arrivée sur la plage (X0) de consigne.
